# EUROPEAN PATENT APPLICATION

(11) **EP 2 805 755 A1**
(43) Date of publication of application: **26.11.2014**
(21) Application number: 14174036.5
(22) Date of filing: 16.07.2007
(51) Int. Cl.: B01D 46/10, B01D 46/00

(54) **A filter assembly**

(30) Priority: 01.08.2006 GB 0615217
(62) Divisional of application: 09178415.7
(71) Applicant: Dyson Technology Limited, Malmesbury, Wiltshire SN16 0RP (GB)
(72) Inventor: Norton, Ben, Malmesbury, Wiltshire SN16 0RP (GB); Frederickson, Jacqueline, Malmesbury, Wiltshire SN16 0RP (GB)
(74) Representative: Fowler, Maria Jayne

(57) **Abstract**

The invention provides a filter assembly (10;100;300;400) for use in a cleaning appliance having a first filter portion (14) and a deformable rim (12;112;312;412), the first filter portion being surrounded by the deformable rim. The first filter portion (14) consists of a non-woven medium. The filter assembly (10;100;300;400) further comprises a second filter portion (16) located downstream of the first filter portion (14). The first filter portion (14) and the second filter portion (16) are held directly adjacent one another by means of the deformable rim (12;112;312;412). The filter assembly (10;100;300;400) further comprises a third filter portion (18) located upstream of the first filter portion (14) and consisting of a mesh material. The first filter portion (14) and the third filter portion (18) are held directly adjacent one another by means of the deformable rim. The filter assembly (10;100;300;400) has a tab (28) located on a surface thereof, to facilitate removal of the filter assembly (10;100;300;400) from a filter housing or a vacuum cleaner.

## Description

The invention relates to a filter assembly, and generally to a filter. Particularly, but not exclusively, the invention relates to a filter assembly designed and adapted for use in a vacuum cleaner.

Filter assemblies for removing dust or debris from the air stream of a vacuum cleaner or other dust retaining appliances are common. Such filter assemblies generally comprise at least one filter located in a filter housing. The filter assembly is arranged such that the filter is placed in the airflow path of the vacuum cleaner. Through use, the filter can become clogged and will require cleaning or replacing. Appliances with replaceable filters are common but the purchase of replacement filters can add to the overall cost of maintenance of the appliance.

Re-useable filters can reduce filter maintenance costs. US 4,902,306, for example, discloses an air filter assembly including electrostatic filter elements and a foam filter that can be cleaned by washing. It is also known to provide a foam filter which is removable from a filter assembly for cleaning. WO 99/12635 discloses an air filter for respiratory apparatus comprising a series of filters; foam, electrostatic and HEPA. The filters are located in two separate housings, a first housing having a washable foam prefilter and a second housing having both electrostatic and HEPA grade filters. The filters in the second housing cannot be removed for cleaning and will require to be replaced at regular intervals.

Another type of known filter assembly is that used on the Dyson range of vacuum cleaners, for example, on model numbers DC04, DC07, DC12, DC14 and DC15. In these vacuum cleaners, the filter assembly essentially comprises a filter housing or filter cage, a first filter portion and a second filter portion. The filter housing is cylindrical or rectangular in shape and is manufactured from a suitable plastics material. The filter housing has a shape which is adapted to receive the first and second filter portions. The second filter portion may be bonded to the filter housing to prevent misalignment. The first filter portion is washable. The second filter may also be washable and the second filter portion and the filter housing must be washed together if the second filter portion is bonded to the filter housing. After washing and after drying the filter assembly can be returned to the vacuum cleaner for further use.

The principle by which filter assemblies of this type operate is described in GB 2349105 and EP 1239760B.

A disadvantage of this arrangement is that, because the filter assembly comprises at least two portions, both removable for washing, there is the possibility that the filter portions may be fitted incorrectly when the user returns the filter assembly to the vacuum cleaner (or other appliance) after drying. It is desirable that the entire filter assembly is cleaned. In the prior art arrangement the first filter portion may be removed and washed without removing further filter portions. This may result in poor performance of the filter assembly.

The present invention seeks to provide an improved filter assembly which obviates disadvantages of the prior art. It is an object of the present invention to provide a filter assembly in which it is easier to clean the filter assembly by washing, and, after drying, easier to return the filter assembly to the vacuum cleaner for further use. It is a further object of the invention to provide a filter assembly for use in a vacuum cleaner or other appliance in which the motor of the vacuum cleaner is reliably protected and in which the maintenance costs of the vacuum cleaner are reduced. Furthermore it is an object of the present invention to provide a filter assembly which allows the user to remove a filter assembly from a vacuum cleaner and return the filter assembly to the vacuum cleaner more reliably.

The invention provides a filter assembly for use in a vacuum cleaner comprising a first filter portion and a deformable rim, the first filter portion being surrounded by the deformable rim. Preferably the first filter portion is formed from a non-woven medium. Alternatively the first filter portion is formed from a foam material. This arrangement is advantageous in that the foam material or non-woven media filter has a large dust retaining capacity and, in use, can become clogged with dust. When the filter portion needs cleaning or replacing, the filter assembly can be grasped by the deformable rim and removed. The deformable rim is provided surrounding the edge of the filter or filter portions, preferably the rim has a small overlap onto the upper and lower surfaces of the filter for securing purposes. Advantageously this provides a large surface area for dirty airflow through the filter and maximizes the effective area of the filter media.

The arrangement provides the advantageous feature that a user has a single piece filter assembly to wash and maintain. The one piece filter assembly does not necessarily require an additional housing or cage to support it within the vacuum cleaner. Advantageously, the arrangement means that maintenance procedures, including disassembly and reassembly of the filter within the vacuum cleaner are easier and simpler for a user.

Preferably, the filter assembly further comprises a second filter portion located downstream of the first filter portion and consisting of an electrostatic filter medium, the filter portions being held directly adjacent one another by means of the deformable rim. Preferably the electrostatic filter is located on the side of the second filter portion facing the first filter portion. Dust or dirt that may escape from the non-woven or foam first filter portion is trapped by the electrostatic filter. This is particularly important when the filter assembly forms the pre-motor filter of a vacuum cleaner. Dirt and dust which might otherwise have been released from the filter assembly, is prevented from passing into the motor and causing damage thereto.

The filter assembly is washable. Advantageously, when the filter assembly becomes less efficient than is desirable, the user is able to wash the filter assembly by removing the filter assembly from the vacuum cleaner housing and placing under a tap. After drying, the filter assembly can be returned to the vacuum cleaner (or other appliance) for further use, avoiding the purchase and cost of replacement filters. The deformable, pliable nature of the rim means that the filter assembly is flexible and capable of being squashed and squeezed by a user. The pliability of the rim and the filter assembly facilitates an effective washing action, including the action of squeezing and wringing out the filter. The deformable rim also assists in squeezing the filter portions and forcing a flow of water through the filter assembly. This means that the user can wash and clean the filter assembly more efficiently and effectively than, up to now, has been possible with prior art filters.

Additionally, the one piece apparatus can be wrung out and squashed to remove water and reduce the drying time of the filter media and the filter assembly. This means that the time between removing the filter assembly from the vacuum cleaner for cleaning, and being able to return the filter assembly to the vacuum cleaner and resume using the appliance is reduced.

The filter assembly further comprises a third filter portion located upstream of the first filter portion and consisting of a mesh material, the first and third filter portions being held directly adjacent one another by means of the deformable rim. Advantageously, the mesh material retains and holds the non-woven or fleece material. The mesh material may be a web or scrim fabric material. Advantageously, the non-woven medium does not shred or lose fibres and is resilient to wear and to washing when retained by the mesh material.

Preferably the deformable rim comprises polyurethane material. Preferably the polyurethane material has a hardness of 20 to 90 Duro measured on the Shore A scale, more preferably 25-35 Duro or 65 to 75 Duro. The rim is of a suitable hardness and deformability such that it is flexible and pliable. The polyurethane material may be manufactured by a spincasting process.

The filter assembly has a tab located on the surface thereof remote from the first filter portion, the tab is arranged to facilitate handling and washing of the filter assembly. When the filter assembly needs cleaning or replacing, the user can remove the filter assembly by grasping the tab. The filter assembly can be held by the tab and washed. This arrangement is advantageous in that the user does not have to handle the filter directly.

Preferably the deformable rim is arranged to include locating means adapted to prevent incorrect orientation of the filter assembly in a vacuum cleaner housing. The locating means ensures that there can be no misplacement of the filter assembly within the vacuum cleaner. If the filter were inaccurately positioned, airflow paths through the filter assembly could be created in which the air was not forced to pass through the filter media. In such an event, the filter assembly could perform inadequately.

Preferably the deformable rim is arranged to include a portion providing sealing means adapted to seal the filter assembly with a vacuum cleaner housing. Preferably in a vacuum cleaner having an airflow path, at least one filter assembly located in the airflow path and a housing adapted to accommodate the filter assembly, the deformable rim, in use, is arranged to press against the housing and seal the filter assembly with the housing. Providing a seal to the filter assembly ensures that there can be no airflow path created through the filter assembly and through any housing for the filter assembly, in which air is not forced to pass through the filter medium.

In the preferred arrangements mentioned above, describing locating and sealing the filter assembly within the vacuum cleaner or other appliance into which the filter assembly is received, the deformable and flexible rim is provided for the mechanism of sealing and/or location. In this arrangement the structure and form of the filter materials comprising the filter portions may be more rigid than the deformable rim.

Further advantageous features are set out in the subsidiary claims. Embodiments of the invention will now be described with reference to the accompanying drawings in which;
Figure 1a is a plan view of a filter assembly according to a first embodiment of the invention;
Figure 1b is a sectional view taken along line b-b of Figure 1a;
Figure 1c is a perspective view of a vacuum cleaner incorporating at least one filter assembly embodying the invention;
Figures 2a, 2b and 2c are plan, side and perspective views respectively of a first filter portion forming part of the filter assembly shown in Figures 1a, 1b and 1c;
Figures 3a and 3b are plan and side views respectively of a second filter portion forming part of the filter assembly shown in Figures 1a, 1b and 1c;
Figures 4a and 4b are plan and side views respectively of a third filter portion forming part of the filter assembly shown in Figures 1a, 1b and 1c;
Figure 5a is a plan view of a filter assembly according to a second embodiment of the invention;
Figure 5b is a sectional view taken along line d-d of Figure 5a;
Figure 5c is a sectional view taken along line d-d of Figure 5a and showing an alternative arrangement of the rim of a filter assembly according to the second embodiment of the invention;
Figure 5d is a sectional view of a detail of the rim of the filter assembly of Figure 5c, showing a lip or edge portion of the filter assembly mounted within a vacuum cleaner housing suitable for use with the present invention;
Figure 6a is a plan view of a filter assembly according to a third embodiment of the invention;
Figure 6b is a sectional view taken along line e-e of Figure 6a;
Figure 7a is a plan view of the front face of a filter assembly according to a fourth embodiment of the invention;
Figure 7b is a plan view of the rear face of a filter assembly of Figure 7a;
Figure 7c is a sectional view taken along line f-f of Figure 7b;
Figure 7d is a sectional view taken along line g-g of Figure 7b;

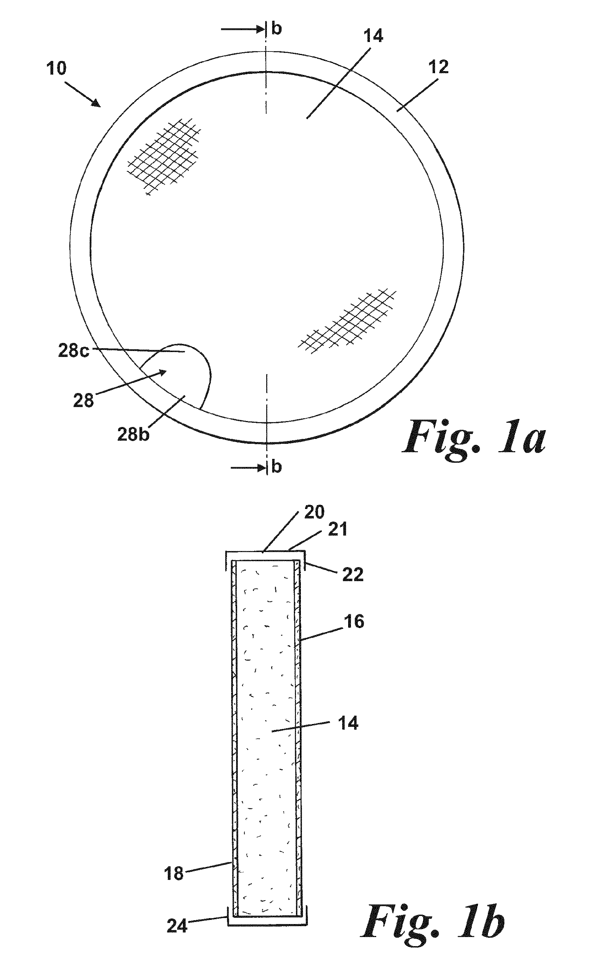

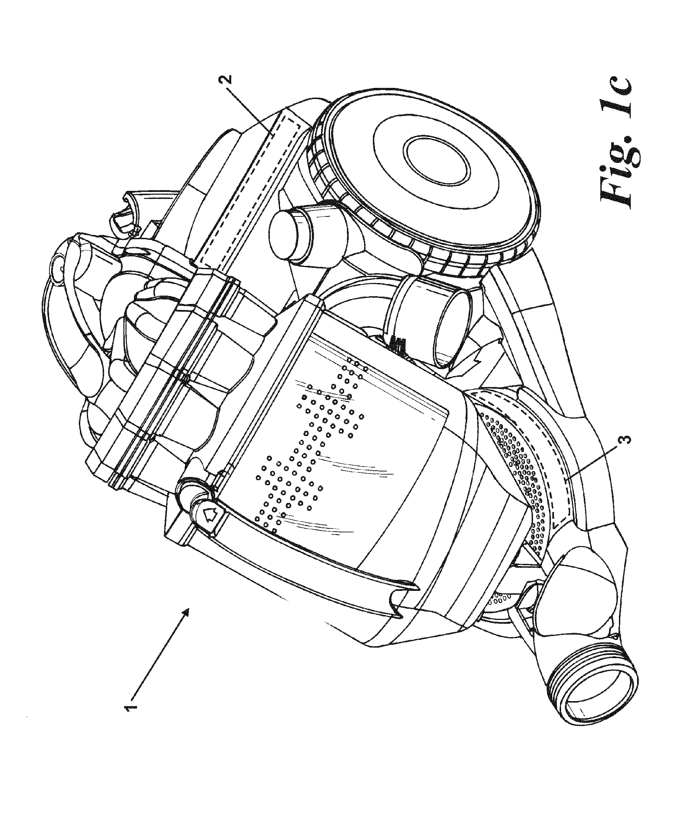

A first embodiment of a filter assembly according to the present invention is shown in Figures 1a and 1b. Figure 1c shows an example of a vacuum cleaner 1 in which the invention can be embodied. The filter assembly 10 essentially comprises a rim 12, a first filter portion 14, a second filter portion 16 and a third filter portion 18. The filter assembly 10 is delimited by the rim 12. The rim 12 is cylindrical in shape and is adapted to be pliable, flexible and resilient. The rim 12 is manufactured from a material with a suitable hardness and deformability so that a user can deform the rim 12 (and thus the filter assembly) by pressing or grasping the rim 12 and twisting and squeezing the filter assembly 10 by hand. A suitable material from which the rim 12 can be manufactured is polyurethane with a hardness of between 20 and 90 Duro measured on the Shore A scale. In the vacuum cleaner shown in Figure 1, the filter assembly 10 may be located within a part (2, 3) of the vacuum cleaner indicated by dashed lines.

The first 14, second 16 and third 18 filter portions are bounded by the rim 12. The rim 12 is manufactured by known moulding and forming techniques suitable for plastics and polyurethane, such as by spincasting, potting or overmoulding. In the embodiment shown in Figures 1 to 4, the rim is formed from polyurethane material. The rim is manufactured using a spincasting process. The polyurethane rim 12 is formed around the filter portions such that the edge of each filter portion is sealed and bonded to the rim 12. The filter assembly 10 may be manufactured by clamping, or otherwise fixing, the filter portions together adjacent one another and then spincasting or moulding the rim 12 around the filters. In this way the first 14, second 16 and third 18 filter portions are encapsulated by the polyurethane material during the manufacturing process.

The rim 12 comprises an annular ring 20 having a cylindrical outer wall 21. The ring 20 has a lower edge 22 lying adjacent the second filter portion 16 and an upper edge 24 lying adjacent the third filter portion 18. The edge 22 is arranged to overlap an area of the end face of the second filter portion 16 and the edge 24 is arranged to overlap an area of the end face of the third filter portion 18. The manufacture of the polyurethane rim by a moulding or casting process generates the overlap edges 22 and 24. It is important that the rim edge 22 and the rim edge 24 are arranged and configured so that a relatively small proportion of the area of the end face of the filter portions on which the edges 22, 24 lie is obstructed by them. The overlapped areas of the filter portions 16 and 18 provide additional points at which the filter materials are secured to the rim 12, and help to increase the resilience, strength and reliability of the filter assembly 10. By this strengthened arrangement the filter assembly 10 and the rim 12 are capable of withstanding manipulation and handling by a user, particularly during washing.

It is desirable to eliminate or reduce stray airflow paths and leaks into the appliance housing through inefficient seals at the edges of the aperture, recess or other shaping into which the filter assembly 10 is received. It is desirable to seal gaps between a closing lid or upper housing secured over the recess and the edges around the recess or opening. In the embodiment shown in Figures 1a and 1b the deformable rim 12 cooperates with the appliance housing in a sealing manner.

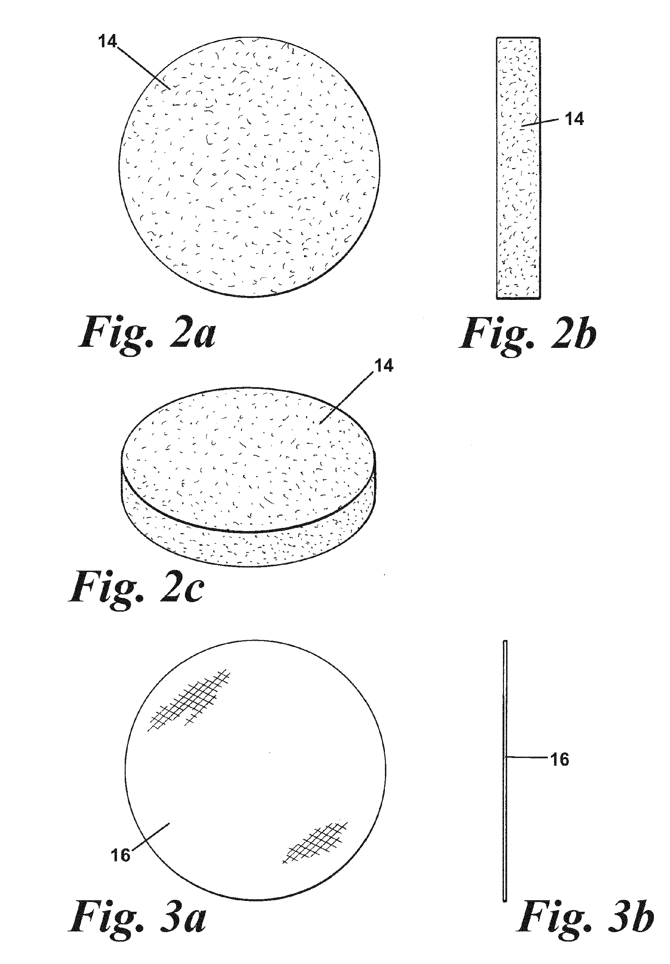

The first, second and third filter portions will now be described with reference to Figures 2a, 2b, 2c, 3a, 3b, 4a and 4b. The first filter portion 14 is made from a non-woven filter medium such as fleece. The fleece material is bounded and contained within the filter assembly and takes the general form of a cylindrical disc of material. A suitable material from which the first filter portion 14 can be manufactured is filter media specification number HF 601/25 SHP, manufactured by Heardi, AG, Germany. The shape and volume of the first filter portion 14 is selected so as to substantially fill the volume indicated and delimited by the rim 12 and the overlap edges 22 and 24. Therefore, the diameter of the first filter portion 14 is substantially the same as the diameter of the cylindrical outer wall 21 of the rim 12. In order to ensure that the filter assembly 10 bounded by the rim 12 is reliably filled, it is preferred that the outer diameter of the first filter portion 14 is slightly larger than the interior diameter of the cylindrical outer wall 21.

The second filter portion 16 is illustrated in Figures 3a and 3b. The second filter portion 16 is circular in shape. The second filter portion 16 comprises a layer of scrim or web material having an open weave or mesh structure. The second filter portion is provided to cover and contain the first filter media and may provide filtration of dirt and dust from an incoming air flow. The web or mesh provides direct access to a large surface area of the non-woven fleece material of the first filter portion 14. In an alternative embodiment the second filter portion 16 consists of an electrostatic filter medium covered on both sides by a protective fabric. The layers are held together in a known manner by stitching or other sealing means.

The dimensions of the second filter portion 16 are chosen so that the second filter portion 16 covers the lower end face of the first filter portion 14. The second filter portion 16 is located directly adjacent the first filter portion 14. The second filter portion 16 is bonded to the rim 12 immediately adjacent the filter portion 16. In this manner, the second filter portion 16 is held in position in the filter assembly 10 with respect to the rim 12. In the preferred embodiment the rim 12 comprises polyurethane and the second filter portion 16 is bonded to the polyurethane rim 12 during manufacture of the filter assembly 10 by the process of spincasting the rim 12 around the filter portions. For a second filter portion comprising an electrostatic filter medium covered on both sides by a protective fabric, it is preferred that all of the layers of the second filter portion 16 are bonded to the rim 12 so that the risk of delamination of the second filter portion 16 during washing is reduced.

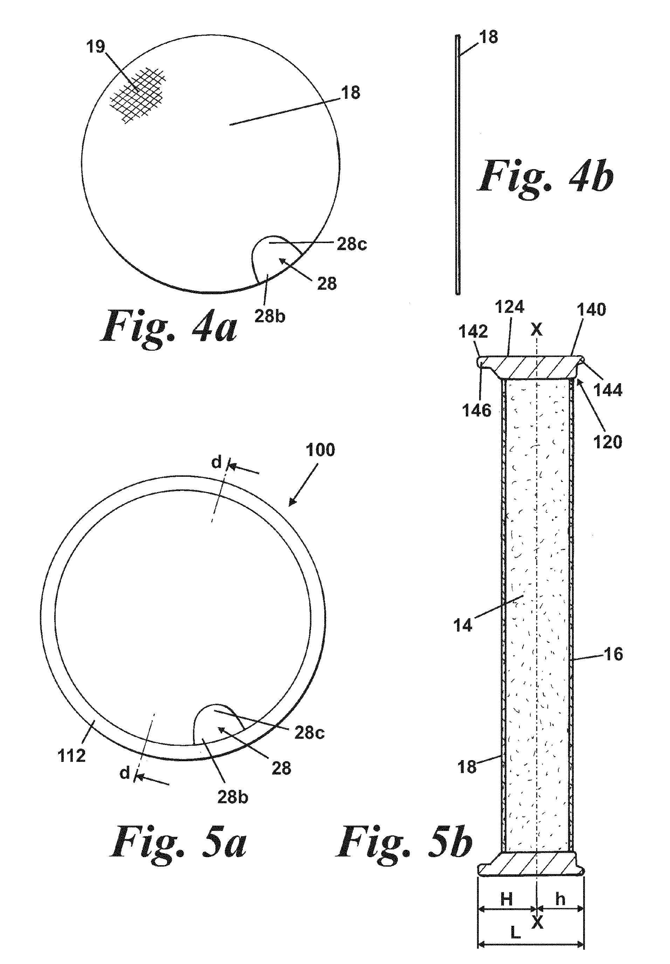

The third filter portion 18 is illustrated in Figures 4a and 4b. The third filter portion 18 is circular in shape. As described for the second filter portion, the third portion 18 comprises a layer of scrim or web material having an open weave or mesh structure, illustrated at portion 19 on Figure 4a. The third filter portion 18 is located directly adjacent the first filter portion 14. The dimensions of the third filter portion 18 are chosen such that the third filter portion 18 covers the upper end face of the first filter portion 14. The third filter portion is provided to cover and contain the first filter portion and also provides direct access to a large surface area of the non-woven fleece material of the first filter portion 14. In the preferred embodiment described above, the rim 12 comprises polyurethane and the third filter portion 18 is bonded to the polyurethane rim 12 during manufacture of the filter assembly 10 by the process of spincasting the rim 12 around the filter portions. In this manner, the third filter portion 18 is held in position in the filter assembly 10 with respect to the rim 12.

A tab 28 is provided on the third filter portion 18 in order to assist with the removal of the filter assembly 10 from the recess or other shaping into which the filter assembly 10 is to be received in a vacuum cleaner. In the embodiment shown, the tab 28 is located at the upstream end of the filter assembly 10. The tab 28 consists of a flexible strand or flap having a securing portion 28b at one end and a gripping portion 28c at the other end. The tab may comprise a fabric or plastics material, or may comprise the same material as the third filter portion 18. The securing portion 28b is fixed or attached to the filter assembly 10 by attachment to a filter portion or by sealing within the rim 12 during manufacture of the assembly. Suitable bonding and securing methods include spincasting, heat welding and adhesive. The tab may be pushed through a slit cut in the material of a filter portion. The tab 28 is made sufficiently long to ensure that the gripping portion 28c is accessible to the user in order to remove easily the filter assembly 10 from the recess or other shaping of the vacuum cleaner.

As can be seen from Figures 1a, 1b and 4, the tab 28 is located on a surface of the third filter portion 18 remote from the second filter portion 16. The assembly is arranged so that the second filter portion 16 is located directly adjacent the recess, or other shaping, dimensioned to accommodate the filter assembly 10, and downstream of filter portions 14 and 18.

In use, the filter assembly 10 is placed in the airflow path of the vacuum cleaner or other appliance in which the filter assembly 10 is to be used.

In the preferred embodiment, the filter assembly 10 is placed upstream of the motor and fan assembly of a vacuum cleaner. The airflow path of the vacuum cleaner is designed and arranged so that air exiting the main dirt and dust collecting apparatus, preferably a cyclonic separating apparatus, enters the filter assembly 10. Specifically, the filter assembly 10 is arranged so that the open mesh of the third filter portion 18 of the filter assembly is upstream of the first 14 and second 16 filter portions. Air to be filtered therefore enters the third filter portion 18 initially. The airflow then passes through the non-woven filter medium of first filter portion 14 and subsequently through the second filter portion 16, before exiting the filter assembly 10.

In the embodiment illustrated in Figures 1 to 4 the third filter portion provides less filtration than the first filter portion. The second filter portion 16 may comprise the same mesh or web filter material as the third filter portion 18. The majority of the filtration takes place within the first filter portion 14 of non-woven filter medium which has a significant capacity for trapping and retaining dust. However, continued use, particularly within a vacuum cleaner, may lead to an increase in the pressure drop across the filter assembly 10. In the event that the filter assembly is not removed and replaced or cleaned by washing before the pressure drop across the filter assembly 10 and filter portion 14 reaches a critical value, dust previously retained within the first filter portion 14 will be expelled therefrom. However, if an electrostatic second filter portion is provided immediately downstream of the first filter portion 14 any dust released by the first filter portion 14 is retained within the filter assembly 10. In an arrangement with an electrostatic second filter portion 16 the third filter portion 18 provides the least filtration of the three filter portions. When a filter assembly 10 of this sort is used as a pre-motor filter in a vacuum cleaner or other appliance, the motor is thereby reliably protected.

Through use, the first filter portion 14 will become clogged with dust or dirt. Continued use would lead to a restriction in the airflow through the filter assembly 10. This causes a reduction in the filtration efficiency. In order to alleviate this, the filter assembly 10 must be replaced or washed. In the preferred embodiment all three filter portions and the assembly 10 are capable of being cleaned by washing. The filter assembly 10 is removed from the vacuum cleaner housing by the user gripping the gripping portion 28c and pulling the tab 28 outwardly from the housing. In this way, the user does not have to handle the clogged filter assembly 10 directly. This makes replacing or cleaning the filter assembly 10 a more hygienic task. The filter assembly 10 is washed by rinsing under a household tap in a known manner and allowed to dry. The filter assembly 10 is then re-inserted into the interior or housing of the appliance or vacuum cleaner, and operation can continue.

The deformable rim 12 is resilient and malleable. The filter portions and filter media comprising, for example, types of foam or fabric are also deformable. This means the entire filter assembly is capable of being bent and squashed. Therefore, a user can squeeze and manipulate the filter assembly during the washing procedure, wringing it out and forcing water through the filter assembly to flush out dirt and dust trapped in the filter portions.

It will be appreciated that the filter assembly described above can be manufactured with any appropriate dimensions. Purely for the purposes of illustration and without any intent to limit the disclosure herein, the dimensions of the filter assembly 10 illustrated above are in the region of 160mm diameter and 25mm depth.

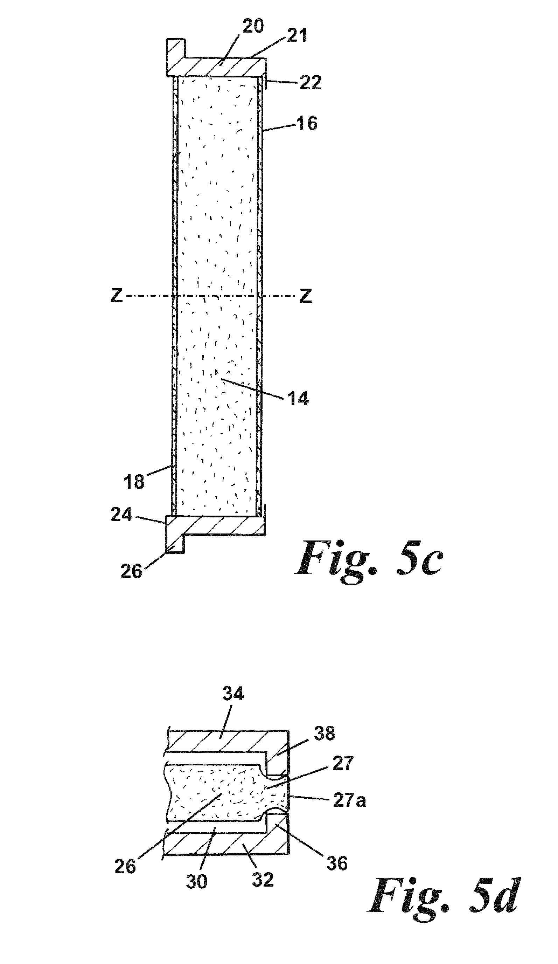

A second embodiment of the filter assembly according to the invention is illustrated in Figures 5a, 5b, 5c and 5d. The filter assembly 100 has essentially the same configuration as the first embodiment shown in Figures 1 to 4. The first, second and third filter portions 14, 16, 18 of the filter assembly 100 may comprise substantially the same filter media as the filter assembly 10 of the first embodiment. In this embodiment, components illustrated and already described in relation to Figures 1 to 4 have like reference numerals. As described in the first embodiment the filter assembly includes a tab 28. The tab 28 is located on a surface of the third filter portion 18 remote from the second filter portion 16.

The rim 112 comprises an annular ring 120 having a cylindrical outer wall 121. The rim 112 is formed from polyurethane. The rim 112 comprises a lower edge portion 140 adjacent the second filter portion 116 and an upper edge portion 142 adjacent the third filter portion 118.

As in the first embodiment, the rim 112 is manufactured by a spincasting process or moulding the rim 112 around the filter portions. In this way the filter portions are encapsulated by the rim material during the manufacturing process.

In the embodiment shown in Figures 5a and 5b the lower edge portion 140 of the rim 112 includes a ridge 144 depending therefrom. The ridge 144 comprises an annular ring projecting away from the horizontal axis (X-X) of the filter assembly 100 and away from the second filter portion 16. Similarly, the upper edge portion 142 of the rim 112 includes a ridge 146 depending therefrom. The ridge 146 comprises an annular ring projecting away from the horizontal axis (X-X) of the filter assembly 100 and away from the third filter portion 18. The annular ring comprising the upper ridge 146 is thicker than the annular ring comprising the lower ridge 144. In addition the height, h, of the ridge 144 projecting from the centre of the filter media is less than the height H of the ridge 146 projecting from the centre of the filter media.

The ridge feature can be used in conjunction with a vacuum cleaner in order to prevent the user from inadvertently positioning the filter assembly 100 in the relevant appliance in an incorrect position. The ridge 144 and the ridge 146 are dimensioned and arranged such that they are able to co operate with a portion of an appliance.

More specifically, the vacuum cleaner will include an aperture, recess or other shaping into which the filter assembly 100 is to be received, and a closing lid or upper housing which will be mounted and secured over the recess into which the filter assembly is to be received. The recess or aperture will be designed to accommodate snugly the filter assembly 100 without including any significant play. The recess will include accommodation with a depth and mounting space sufficient to accommodate the ridge 144. This ensures that the user will be unable to seat the filter assembly 100 in the recess in the vacuum cleaner if the filter assembly 100 is turned the wrong way up. The user will be alerted to this and will be able to correct the orientation of the filter assembly 100. As a further, or alternative, feature if the user forcibly seats the filter assembly 100 in the recess or aperture provided, the user will be unable to close the recess or housing with the portion of the housing or lid supplied for that purpose.

It is desirable to eliminate or reduce stray airflow paths and leaks into the appliance housing through inefficient seals at the edges of the aperture, recess or other shaping into which the filter assembly 10, 100 is received. A loose fit between the edges of the recess or edges of the opening in the housing could lead to a reduction in performance due to air being bled into the appliance through inefficient seals. Therefore, it is desirable to seal gaps between a closing lid or upper housing secured over the recess and the edges around the recess or opening. In the embodiments shown in Figures 1 to 4, 5a and 5b a seal may be provided by the rim 12, 112 and the other parts of the appliance housing and aperture (not shown). The deformable rim 12, of the first embodiment may have a size and shape adapted to cooperate with the edges of the aperture or housing in a sealing manner.

In the embodiment shown in Figures 5a and 5b the deformable rim 112 is capable of cooperating with the appliance housing and the recess (not shown) into which the filter assembly 100 is to be received. The lower edge 140 and the ridge 144 abut a periphery of a recess or opening in a sealing manner and the upper edge 142 and ridge 146 are arranged impinge on, and seal with, an inner surface of the filter housing. In order to ensure that the recess opening is sealed reliably, it is preferred that the height (L) of the deformable rim 112 is slightly greater than the depth of the recess or opening into which the filter assembly 100 is to be received.

In use, the filter assembly 100 is placed in the airflow path of the vacuum cleaner or other appliance in which the filter assembly 100 is to be used. The upper ridge 146 and lower ridge 144 are used to ensure that the filter assembly is correctly orientated. Furthermore the deformable rim 112 will be squashed and compacted by closing the lid or upper housing provided on the appliance. When the filter is used in operation with a vacuum cleaner, the rim 112 will be deformed within the housing under the force of suction. The deformation of the rim 112 will contribute to the seal. In the above manner the filter assembly 100 is held in a fixed position with respect to the vacuum cleaner housing and the deformable rim is held in a sealing manner with respect to the vacuum cleaner housing.

In this preferred embodiment, the filter assembly 100 is placed upstream of the motor and fan assembly of a vacuum cleaner. The airflow path of the vacuum cleaner is designed and arranged so that air exiting the main dirt and dust collecting apparatus, preferably a cyclonic separating apparatus, enters the filter assembly 100. Specifically, the filter assembly 100 is arranged so that the third filter portion 18 of the filter assembly is upstream of the first 14 and second 16 filter portions. Air to be filtered therefore enters the third filter portion 18 initially. The airflow then passes through the non-woven filter medium of first filter portion 14 and subsequently through the electrostatic grade filter portion 16, before exiting the filter assembly 100.

Figures 5c and 5d illustrate an alternative embodiment of the filter assembly and rim shown in Figures 5a and 5b. The filter assembly includes a rim 112 comprising a lip 26. The lip 26 projects outwardly away from the axis (Z-Z) of the filter assembly. The lip 26 may be formed integrally with the rim 112. Manufacture of the filter assembly using a spincasting process means that the lip 26 and the rim 112 can be formed contemporaneously and as a single piece.

The lip 26 is also deformable and flexible in a similar manner to the rim 112. A suitable material from which the lip 26 can be manufactured is polyurethane with a hardness of shore A of between 20 and 90 Duro. In the preferred embodiments shown in Figures 1 to 5 the rim has a hardness of 25 Duro shore A.

The lip feature can be used in conjunction with the vacuum cleaner (or other appliance) in order to prevent the user from inadvertently positioning the filter assembly 100 in the appliance in an incorrect orientation. More specifically, the vacuum cleaner will include an aperture, recess or other shaping into which the filter assembly 100 is to be received, but the recess will not include any accommodation for the lip 26. This ensures that the user will be unable to seat the filter assembly 100 in the recess in the vacuum cleaner if the filter assembly 100 is turned the wrong way up. The user will be alerted to this and will be able to correct the orientation of the filter assembly 100.

As discussed in relation to the embodiment of Figures 5a and 5b, it is desirable to eliminate or reduce airflow into the appliance through the recess opening or other shaping in which the filter assembly 100 is received. In the embodiment shown in Figures 5c and 5d the lip feature 26 is used in conjunction with the appliance or vacuum cleaner housing in order to seal the opening or other shaping.

Figure 5d illustrates a sectional view of the embodiment shown in Figure 5c and a portion of a vacuum cleaner suitable for use with the present invention. The portion of the vacuum cleaner shown in Figure 5d has a recess or shaping 30 into which the filter assembly 10 is received. The detail shown in Fig 5d includes lip 26 having a seal portion 27 extending therefrom. The seal portion 27 is resiliently deformable. The seal portion 27 can be formed from the same material as the rim 12 and the lip 26, and preferably the rim and lip and seal portion comprise one part. The seal portion 27 is formed from polyurethane material of suitable hardness and deformability to provide resilient and deformable features. Alternatively, the seal portion 27 could be moulded from a plastics material and bonded to the filter assembly 100 by a suitable adhesive.

The seal portion 27 is dimensioned and shaped so that its outer surface 27a abuts against the periphery of the recess 30 in a sealing manner when the cylindrical filter assembly 10 is located in the recess 30 in the vacuum cleaner.

Figure 5d shows an exemplary embodiment of the sealing portion 27 and the manner of sealing provided by the resilient, deformable lip 26 and seal 27. The vacuum cleaner housing illustrated in Figure 5d comprises an annular mounting ring 32 having an upstanding portion 36 extending therefrom. The vacuum cleaner housing further comprises a lid provided with an annular ring 34 and a depending portion 38 projecting therefrom. The portion 38 of the lid is arranged in a position opposite to, and corresponding with upstanding portion 36. The depending portion 38 is arranged to impinge on the mounting ring 32 and on the upstanding portion 36 so as to close the recess 30 opening and clamp over the lip 26.

A skilled reader will appreciate that the closure can be formed by a catch or a clip, by snap-fitting fasteners or by other equivalent means. The seal shown in Figure 5d is illustrated as a concave portion of the lip 26 in order to represent the deforming and squashing of the polyurethane material by the lid and the mounting ring 32. It will be appreciated however, that the lip 26 may be deformed into other shapes by the parts of the vacuum cleaner housing effecting the sealing mechanism. For example, an alternative shape of the annular ring 34, including a recessed part, may accommodate a portion of the lip 26 and create a seal. In that alternative arrangement the lip 26 may be directed upwardly into the recessed part by the upstanding portion 36 of the mounting ring 32.

Alternatively, the deformable rim and seal portion 27 may be resilient and deformable to be a push-fit with the housing.

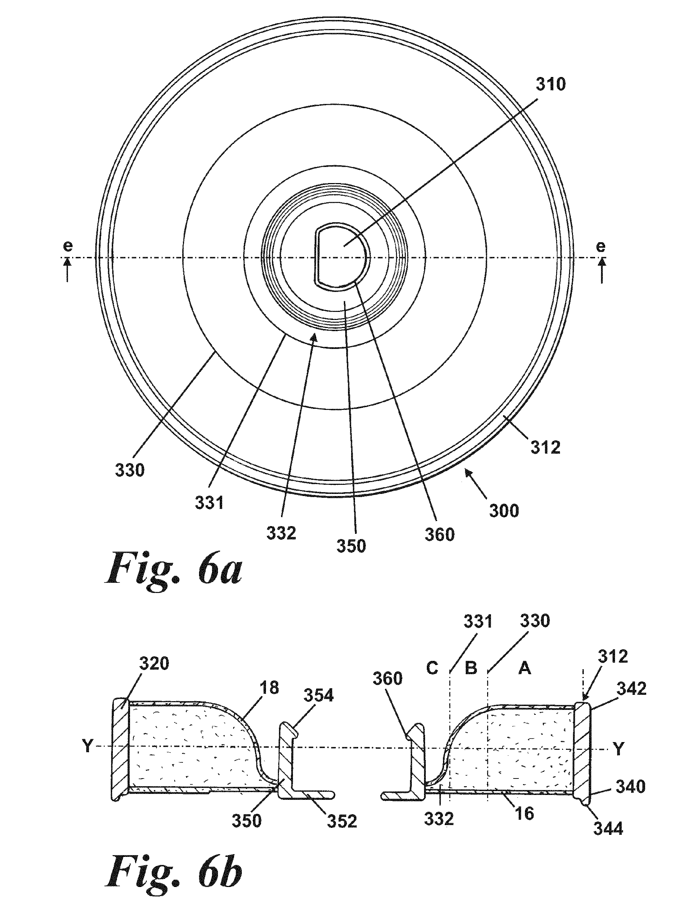

A further alternative embodiment of the filter assembly according to the invention is shown in Figures 6a and 6b. The filter assembly 300 has a configuration similar to the previous embodiments shown in Figures 1 to 5. In this embodiment components illustrated and already described in relation to figures 1 to 5 have like reference numerals.

The filter portions are bounded by a rim 312. The rim 312 comprises an annular ring 320 having a cylindrical outer wall 321. The rim 312 is formed from polyurethane material. The rim 312 comprises a lower edge portion 340 adjacent the second filter portion 16 and an upper edge portion 342 adjacent the third filter portion 18.

In the embodiment shown in Figures 6a and 6b an aperture 310 is provided at the centre of the filter assembly 300. The filter assembly 300 includes a cylindrical sleeve 350 located inwardly of the rim 312. The aperture 310 is bounded by the cylindrical sleeve 350. The sleeve 350 is formed from polyurethane material. The sleeve 350 comprises a lower cuff 352 and an upper cuff 354. The upper cuff 354 of the sleeve includes a lug 360 depending therefrom. The lug 360 projects inwardly towards the centre of the filter assembly.

The sleeve 350 and lug 360 allow the filter assembly 300 to be inserted into and connected to a corresponding part of the appliance in which the filter assembly is to be used. The embodiment shown in Figures 6a and 6b may be used with a filter housing or cage supporting the filter assembly 300 within the appliance in which it is to be used. In that case the sleeve 350 may be shaped to allow the filter assembly 300 to be inserted into or connected to the housing or cage. It will be appreciated that the sleeve 350 and/or the rim 312 can carry means other than lug 360 for fixedly connecting the filter assembly 300 to the relevant appliance or filter housing.

The embodiment shown in Figures 6a and 6b includes first 14, second 16 and third 18 filter portions surrounded by the rim 312, in a similar manner to the previous embodiments shown in Figures 1 to 5. Additionally, the first 14, second 16 and third 18 filter portions are sealed and bonded to the sleeve 350 at the lower cuff 352. In the embodiment shown in Figures 6a and 6b the depth of the filter layer in the assembly (combination of the first 14, second 16 and third 18 filter portions) reduces towards the centre of the filter assembly. The arrangement is such that the first 14, second 16, and third 18 filter portions are compressed and drawn down towards the centre of the filter assembly and bonded to the lower cuff 352 at the edge of the aperture 310. Regions A and B of Figure 6b illustrate the variation in depth of filter media and compression. The regions A, B and C are shown delimited by rim 312, sleeve 350 and lines 330, 331. Compacted filter material is shown in region C and indicated by the group of lines 332 in Figure 6a.

As in the previous embodiments, the rim 312 is manufactured by known moulding and forming techniques suitable for plastics and polyurethane, such as spincasting, potting or overmoulding. The manufacturing technique used for the filter assembly 300 includes casting or moulding the rim 312 around the filter portions. In this way the filter portions are encapsulated by the rim material during the manufacturing process. The sleeve 350 is manufactured in a similar manner to the rim 312. The manufacturing technique used for the filter assembly 300 may include casting or potting the sleeve into the assembly 300 while clamping the filter portions together.

In the embodiment shown in Figures 6a and 6b the lower edge portion 340 of the rim 312 includes a ridge 344 depending thereon. The ridge 344 comprises an annular ring projecting away from the horizontal axis (Y-Y) of the filter assembly 300 and away from the second filter portion 16. As in the embodiment shown in Figures 5a and 5b the ridge 344 can be used in conjunction with a vacuum cleaner in order to prevent the user from inadvertently positioning the filter assembly 100 in the relevant appliance in an incorrect position.

In use, the filter assembly 300 is placed in the airflow path of the vacuum cleaner or other appliance in which the filter assembly 300 is to be used. The use and operation of the filter assembly 300 is substantially the same as described previously for the first and second embodiments. The advantageous features of the deformable, pliable rim 312 and the squashable and washable nature of the filter apply to this embodiment as described above for the previous embodiments.

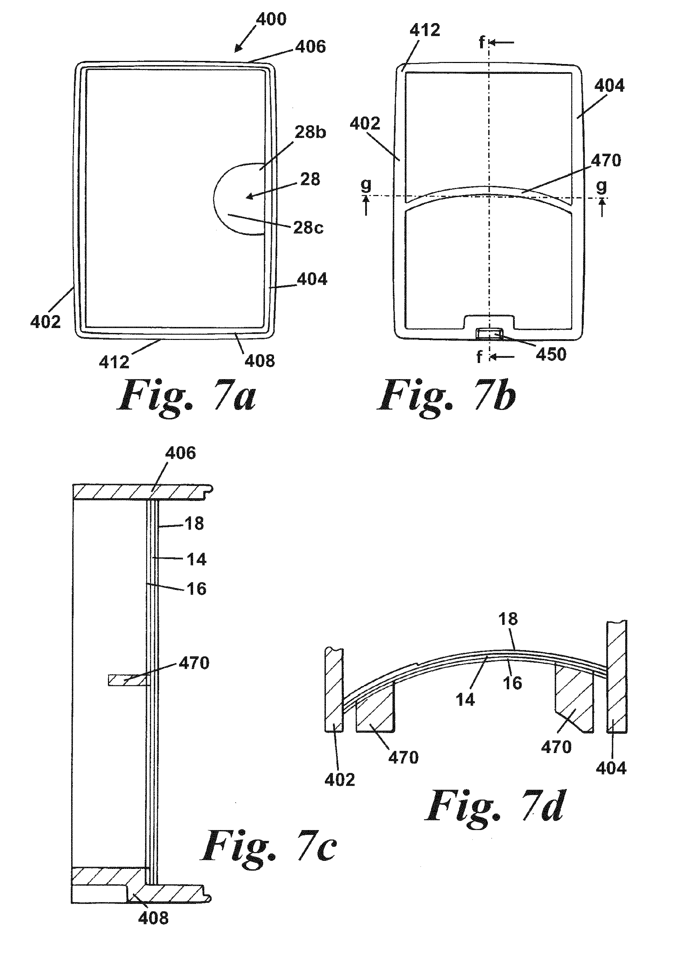

A further alternative embodiment of the filter assembly according to the invention is shown in Figures 7a, 7b, 7c and 7d. The filter assembly 400 has a filter construction similar to the previous embodiments shown in Figures 1 to 6. In this embodiment, components illustrated and already described in relation to figures 1 to 5 have like reference numerals.

The rim 412 is substantially rectangular in shape and is delimited by side walls 402, 404 and end walls 406 and 408. The filter assembly comprises first 14, second 16 and third 18 filter portions, as described previously. The filter portions 14, 16 and 18 are bounded by the walls 402, 404, 406 and 408. The rim 412 is formed from polyurethane material. The shape of the rim 412 is adapted to be inserted into and connected to a corresponding part of the appliance in which it is to be used. The rim 412, the walls 402, 404, 406 and 408 and a supporting rib 470 comprise a structure having a suitable shape to provide a housing and support for the filter portions. In this way the use of a corresponding cage or filter housing can be avoided.

In the embodiment shown in Figures 7a, 7b, 7c and 7d the first 14, second 16 and third 18 filter portions are sealed and bonded to the rim 412.

In the embodiment shown in Figures 7b and 7c a recess 450 is provided in the end wall 408 of the rim 412. As in the embodiment shown in Figures 5a and 5b the ridge 344 can be used in conjunction with a vacuum cleaner in order to prevent the user from inadvertently positioning the filter assembly 100 in the relevant appliance in an incorrect position.

As in the previous embodiments, the rim 412 is manufactured by known moulding and forming techniques suitable for plastics and polyurethane, such as spincasting, potting or overmoulding. The manufacturing technique used for the filter assembly 300 can include potting or moulding the rim 412 around the filter portions. In this way the filter portions are encapsulated by the rim material during the manufacturing process.

In a similar manner to the embodiments described above, the recess 450 can be used in conjunction with a vacuum cleaner in order to highlight to the user the correct location and orientation of the filter within the relevant appliance and to prevent the user from inadvertently positioning the filter assembly 400 in the appliance in an incorrect position.

In use, the filter assembly 400 is placed in the airflow path of the vacuum cleaner or other appliance in which the filter assembly 400 is to be used. The use and operation of the filter assembly 400 is substantially the same as described for the previous embodiments. In use, the filter assembly and the rim 412 will be deformed within the housing under the force of suction. The deformation of the rim 412 and the side walls 402, 404 and end walls 406, 408 will contribute to the seal.

It will be appreciated from the embodiments of the invention described above that the rim can carry means for fixedly connecting the filter assembly 10 to the relevant appliance. The manner in which the filter assembly is connected to the appliance is immaterial to this invention and a skilled reader will appreciate that the connection can be formed by the mating of camming surfaces, by screw-threaded portions, by snap-fitting/quick-release fasteners or other equivalent means. Also the manner in which the filter assembly is received and located within the appliance is immaterial to this invention and a skilled reader will appreciate that the location can be formed by the mating of corresponding surfaces, push or snap fittings or other equivalent means.

Modifications and variations of the embodiments of a filter assembly described above will be apparent to a skilled reader. For example the shape and size of the filter assembly, the shape and size of the rim of the filter assembly and of the filter portions within the assembly may be altered without departing from the scope of the invention. The rim may be formed around part of the filter portions or surround the entire circumference or boundary of the filter portions.

The rim may be manufactured by other manufacturing methods. The rim may be bonded to the filter potions by other techniques and manufacturing methods. For example the rim and assembly may be manufactured by heat welding, ultra sonic welding, casting, and adhesive. A skilled reader will appreciate that the manufacture and formation of a lip or other sealing structure may be by potting or by overmoulding or by other equivalent manufacturing processes used for polyurethane.

The deformable rim may comprise other material such as types of plastics or rubber of appropriate hardness, deformability and pliability.

It will be appreciated that other filter media having different density and thickness, such as foam materials, paper, HEPA filter media, fabric or open cell polyurethane foam could be used in any combination within the filter portions and within the assembly. The number of filter portions or layers may be varied. The order of the filter layers may be varied. The filter assembly may form the pre-motor filter of a vacuum cleaner or may form the post-motor filter of a vacuum cleaner.

The filter assembly may be housed in a housing or cage, the housing or cage may be capable of being cleaned by washing. It will also be appreciated that the shape of the filter and any filter housing need not be cylindrical and other shapes will be equally suitable.

It will be appreciated that the tab can be any suitable material or shape to facilitate removal of the filter from the appliance or filter housing, for example, the tab may be hook shaped or the type of tab commonly used for textile materials. Other variations will be apparent to a skilled reader.

## Claims

1. A one piece filter assembly (10) for use in a cleaning appliance comprising a first filter portion (14), a second filter portion (16), a third filter portion (18) and a deformable rim (12), the filter portions being bounded by the deformable rim (12), wherein the filter assembly is washable, and wherein the filter assembly has a tab (28) located on a surface thereof remote from the first filter portion, the tab (28) is arranged to facilitate handling and washing of the filter assembly (10).

2. A one piece filter assembly (10) as claimed in Claim 1, wherein the deformable rim (12), comprises an annular ring (20) having a cylindrical outer wall (21) wherein the annular ring (20) has a lower edge (22) lying adjacent the second filter portion (16) and an upper edge (24) lying adjacent the third filter portion (18).

3. A one piece filter assembly (10) as claimed in claim 2, wherein the lower edge (22) is arranged to overlap an area of the end face of the second filter portion (16).

4. A one piece filter assembly (10) as claimed in claim 2 or claim 3, wherein the upper edge (24) is arranged to overlap an area of the end face of the third filter portion (18).

5. A one piece filter assembly (10) as claimed in any preceding claims, wherein the filter portions (14, 16, 18) are sealed and bonded to the deformable rim (12).

6. A one piece filter assembly (10) as claimed in any preceding claim, wherein the filter portions are deformable.

7. A one piece filter assembly (10) as claimed in any preceding claim, wherein the filter portions comprise filter media.

8. A one piece filter assembly (10) as claimed in claim 7, wherein the filter media is deformable.

9. A one piece filter assembly (10) as claimed in any preceding claim, wherein first filter portion (14) is formed from a non-woven medium.

10. A one piece filter assembly as claimed in any of claims 1 to 8 wherein the first filter portion is formed from a foam material.

11. A one piece filter assembly as claimed in any preceding claim, wherein the second filter portion (16) consists of a mesh material.

12. A one piece filter assembly as claimed in any preceding claim, wherein the third filter portion consists of a mesh material.

13. A one piece filter assembly as claimed in any preceding claims, wherein the deformable rim comprises polyurethane material.

14. A one piece filter assembly as claimed in any preceding claim, wherein both the second filter portion and the third filter portion are located directly adjacent the first filter portion.

15. A filter assembly (10) for use in a cleaning appliance comprising a first filter portion (14), a second filter portion (16), a third filter portion (18) and a deformable rim (12), the filter assembly being delimited by the deformable rim (12), wherein the filter assembly is washable, and wherein the filter assembly has a tab (28) located on a surface thereof remote from the first filter portion, the tab (28) is arranged to facilitate handling and washing of the filter assembly (10).

16. A filter assembly according to claim 15, wherein the filter assembly is a one piece filter assembly.

17. A vacuum cleaner having an airflow path and a one piece filter assembly located in the airflow path, **characterised in that** the one piece filter assembly (10) for use in a cleaning appliance comprising a first filter portion (14), a second filter portion (16), a third filter portion (18) and a deformable rim (12), the filter portions being bounded by the deformable rim (12), wherein the filter assembly is washable, and wherein the filter assembly has a tab (28) located on a surface thereof remote from the first filter portion, the tab (28) is arranged to facilitate handling and washing of the filter assembly (10).

18. A vacuum cleaner as claimed in Claims 21 or 22, comprising a motor for causing air to flow along the airflow path, wherein the or a filter assembly is positioned upstream of the motor.

19. A vacuum cleaner as claimed in Claims 21 or 22, and comprising a motor for causing air to flow along the airflow path, wherein the or a filter assembly is positioned downstream of the motor.
